# FASCICULE DE BREVET EUROPEEN

(11) **EP 1 537 007 B1**
(45) Date de publication et mention de la délivrance du brevet: **26.04.2006**
(21) Numéro de dépôt: 03758207.9
(22) Date de dépôt: 05.08.2003
(51) Int. Cl.: B62D 49/06

(54) **VEHICULE UNIVERSEL DE TRANSPORT A VOIE, EMPATTEMENT ET GARDE AU SOL VARIABLES**
UNIVERSELLES TRANSPORTFAHRZEUG MIT VARIABLER SPURWEITE, RADSTAND UND BODENFREIHEIT
UNIVERSAL TRANSPORT VEHICLE WITH ADJUSTABLE TRACK, WHEEL SPACING AND GROUND CLEARANCE

(30) Priorité: 10.09.2002 FR 0211181
(43) Date de publication de la demande: 08.06.2005
(73) Titulaire: Obry, Jean-Marie, 74540 Alby sur Cheran (FR)
(72) Inventeur: Obry, Jean-Marie, 74540 Alby sur Cheran (FR)
(74) Mandataire: Vuillermoz, Bruno
(86) Numéro de dépôt international: PCT/FR2003/002460
(87) Numéro de publication internationale: WO 2004/024541

(56) Documents cités:
- BE-A- 1 009 973
- US-A- 3 306 390
- US-A- 3 899 037
- US-A- 4 834 409
- US-B1- 6 311 795
- PATENT ABSTRACTS OF JAPAN vol. 001, no. 144 (M-048), 24 novembre 1977 (1977-11-24) & JP 52 088920 A (KUBOTA LTD), 26 juillet 1977 (1977-07-26)

## Description

L'invention concerne un véhicule universel de transport, dont la voie, c'est à dire la largeur entre les roues de chacun des deux trains avant et arrière, l'empattement, c'est à dire la distance séparant le train avant du train arrière, et la garde au sol, sont variables.

Dans un certain nombre d'applications, il s'avère nécessaire de disposer d'un châssis équipé de roues, susceptible de présenter une variabilité de la largeur de la voie, ainsi que de la garde au sol. Ceci est notamment vrai dans le domaine des engins de travaux publics, mais s'applique également pour les chaises roulantes pour paraplégiques, lorsqu'ils sont amenés à déambuler dans les habitations dans lesquelles les largeurs de porte ne sont pas standardisées, et en tout cas inadaptées à de tels chariots. En outre, les standards rencontrés en relation avec de tels chariots sont définis comme étant à voie étroite et empattement court, donc tout particulièrement instables, en particulier sur des terrains non stabilisés ou accidentés.

On a proposé, par exemple dans le brevet français FR-A-2 371 333, un chariot de transport à hauteur et largeur de voie réglables, mais dont la variation de la voie ou de la hauteur s'effectue manuellement, et nécessite le déplacement des roues une à une, au niveau de différents logements prévus à cet effet, destinés à recevoir le bras porteur de la roue.

US 3 306 390 est considéré comme étant l'état de la technique le plus proche de l'objet de la revendication 1 et décrit un véhicule universel de transport comportant quatre roues indépendentes montées chacune sur un moyeu porté par un bras porteur solidaire du châssis du véhicule chacun des bras porteur étant articulé sur le châssis selon un axe d'articulation.

Outre bien évidemment l'impossibilité d'automatiser le déplacement des roues, les variations possibles de la largeur de la voie et de la garde au sol du chariot ne peuvent être réalisées que de manière discrète, puisque lesdits logements ne sont pas répartis uniformément, en tout cas pas de manière continue, en fonction des différents souhaits possibles de l'utilisateur.

L'objet de la présente invention est tout d'abord, de pallier ces inconvénients; mais d'autre part et surtout de proposer un véhicule polyvalent, dont la modification de voie, d'empattement et de garde au sol peut être réalisée en une seule manoeuvre, selon des valeurs continues.

Ce faisant, il devient possible, tout en élargissant la voie, d'augmenter la garde au sol dudit véhicule, et partant d'optimiser sa stabilité.

A cet effet, le véhicule universel de transport conformémeat à l'invention est défini par les caractéristiques de la revendication 1.

Ainsi, lorsque l'on actionne l'organe en question, celui-ci agit sur les bras porteur, provoquant soit la rotation en direction du châssis et la diminution de la largeur de la voie et corollairement la diminution de l'empattement, soit au contraire la rotation des bras porteurs à l'opposé du châssis, et donc l'écartement de la voie, et corollairement l'augmentation de l'empattement.

Selon une première forme de réalisation de l'invention, cet organe d'activation est constitué d'une vis sans fin, solidaire du châssis, sur laquelle sont susceptibles de se déplacer en translation de manière antagoniste deux bagues, au niveau desquelles est solidarisée l'extrémité respective de biellettes solidarisées audits bras porteur.

Selon une autre forme de réalisation de l'invention, l'organe d'activation est constitué par un vérin, solidaire du châssis, dont l'autre point d'application est constitué par le bras porteur lui-même. En d'antres termes, selon cette forme de réalisation, l'action est directement réalisée sur le bras porteur.

Avantageusement, l'axe d'articulation des bras porteur sur le châssis est incliné par rapport à la verticale, de telle sorte à induire simultanément avec l'écartement de la voie et l'augmentation de l'empattement, une augmentation de la garde au sol. Cette inclinaison est communément appelée angle de chasse.

Selon une forme de réalisation de l'invention, lesdits bras porteur d'un même train de roues (avant ou arrière) sont reliés par paire à l'organe d'activation. De la sorte, lorsque ledit organe est activé, on induit simultanément et symétriquement l'écartement des roues du train considéré.

Avantageusement, le véhicule comporte au moins un train de roues directionnelles, solidarisées au châssis, outre par le bras porteur principal, également par un bras de parallélisme, solidaire dudit châssis, ledit bras étant articulé audit châssis par un axe vertical et étant susceptible de tourner par rapport à cet axe au moyen d'une barre de direction entraînée en translation par un ensemble crémaillère/pignon ou tout autre moyen équivalent.

La manière de réaliser l'invention et les avantages qui en découlent ressortiront mieux de l'exemple de réalisation qui suit donné à titre indicatif et non limitatif à l'appui des figures annexées.

Les figures 1 et 2 sont des représentations schématiques du principe de fonctionnement du véhicule conforme à l'invention, illustrant notamment la variation de voie et d'empattement, respectivement voie étroite et voie élargie.
La figure 3 illustre également schématiquement la variation de la garde au sol dudit véhicule.

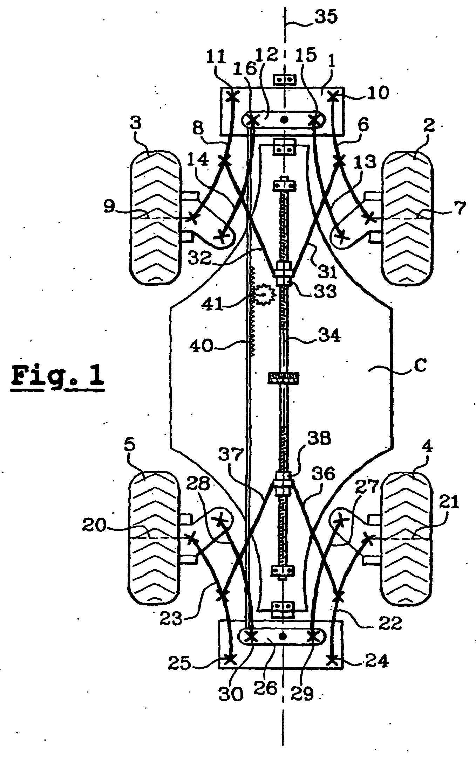

On a donc schématiquement représenté sur la figure 1, le véhicule universel conforme à l'invention, de façon simpluié, afin de bien faire apparaître les différentes caractéristiques de l'invention.

Ce véhicule comprend un châssis référencé (C), incorporant deux essieux oscillants, dont seul l'essieu avant (1) a été représenté. Quatre roues indépendantes (2), (3) (4) et (5) sont montées sur lesdits essieux.

Chacune des roues avant (2) et (3) est directrice et montée sur un moyeu, respectivement (7) et (9), solidarisé au châssis par l'intermédiaire d'un bras porteur, respectivement (6) et (8).

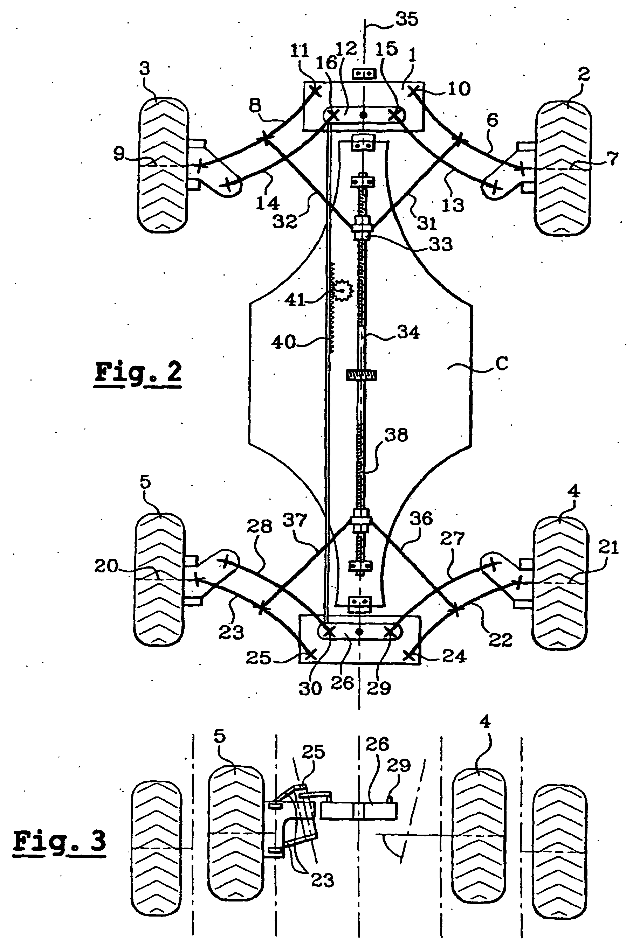

Ces bras porteur (6, 8) sont articulés sur le châssis (1) au niveau d'axes d'articulation, également dénommés axes-pivot (10) et (11) inclinés d'un angle de chasse par rapport à la verticale, ainsi qu'on peut bien l'observer sur la figure 3. Cette inclinaison permet d'augmenter la garde au sol, notamment lors des phases d'écartement des voies.

Ces axes-pivot sont positionnés au voisinage de l'extrémité avant du châssis.

Corollairement, les moyeux (7) et (9) des deux roues directrices (2) et (3) sont en outre solidarisés à l'essieu avant (1) et plus exactement à un organe directionnel (12) au moyen d'un bras de maintien du parallélisme (13) et (14). Ces bras de maintien sont également articulés au niveau de l'organe directionnel (12), monté rotatif par rapport au châssis, au niveau d'axes d'articulation (15) et (16).

S'agissant des roues arrières (4) et (5), celles-ci comportent également un moyeu (20) (21), solidarisé à l'essieu arrière au moyen de bras porteurs (22) et (23), articulés au niveau d'axes - pivot (24) et (25) sur ledit châssis, également susceptibles de présenter un angle de chasse par rapport à la verticale. Là encore, les axes-pivot sont positionnés au voisinage de l'extrémité postérieure du châssis.

Les moyeux (20) et (21) sont également solidarisés au niveau d'un organe directionnel (26) par l'intermédiaire de bras de maintien du parallélisme (27) (28) solidarisés à un organe directionnel (26) au niveau d'axes d'articulation (29) et (30), ledit organe directionnel (26) étant également monté rotatif par rapport au châssis.

Selon l'invention, les bras porteurs (6) et (8) sont reliés par l'intermédiaire de biellettes (31) et (32), à une bague (33), susceptible de coulisser sur une vis sans fin (34) orientée selon l'axe principal (35) dudit véhicule, et solidaire du châssis.

Corollairement, les bras porteurs (22) et (23) des roues arrières (4) et (5) sont solidarisées simultanément par l'intermédiaire de biellettes (36) et (37) à une bague (38), susceptible de coulisser sur la même vis sans fin (34).

De la sorte, lorsque l'on actionne cette vis sans fin en rotation, on provoque selon un premier sens de rotation conféré à la vis, l'écartement l'une de l'autre des deux bagues (33) (38), et corollairement l'écartement des bras porteurs (6) et (8) d'une part, et (22) (23) d'autre part, par rotation autour de leur axe d'articulation respectif (10, 11) (24, 25) et donc, une augmentation de la largeur de la voie du véhicule outre une augmentation de l'empattement. Corollairement, compte tenu de l'angle de chasse conféré auxdits axes - pivot, cet écartement de la voie s'accompagne d'une augmentation de la garde au sol du châssis, et donc du véhicule.

A l'inverse, selon le second sens de rotation imprimé à la vis (34), on induit le rapprochement des bagues (33) et (38) l'une de l'autre, induisant une traction sur lesdits bras porteurs (6) et (8), (22) et (23), provoquant le rapprochement des roues en direction de l'axe (35) du véhicule, et donc le rétrécissement de la voie desdites roues avant et arrière simultanément, outre une diminution de l'empattement. Corollairement, cette diminution de la voie et de l'empattement s'accompagne d'une diminution de la garde au sol du châssis et donc du véhicule.

L'actionnement de cette vis sans fin (34) peut être réalisée électriquement ou au moyen d'un vérin pneumatique ou hydraulique (non représenté). En outre, selon une forme de réalisation non représentée, l'écartement ou le rapprochement des bras porteur peut être réalisé au moyen de vérins, agissant indépendamment ou solidairement au niveau de chacun des bras porteur.

On conçoit dès lors qu'au moyen d'une manoeuvre simple et unitaire, il est possible de modifier l'écartement de chacune des voies, respectivement avant et arrière, mais également de modifier l'empattement du véhicule universel conforme à l'invention et ce, de manière simplifiée.

Selon une varianté non représentée, il peut être envisagée de prévoir deux vis sans fin indépendantes, de telle sorte à ne pouvoir faire varier que l'une ou l'autre des deux voies, respectivement avant et arrière, en fonction des besoins de l'utilisateur.

On conçoit également que dès lors que l'on fait varier la voie, notamment avant et arrière, que cette variation soit simultanée pour les deux voies avant et arrière, ou indépendante, et notamment lorsque l'on augmente cette voie, on augmente corollairement l'empattement dudit véhicule.

En effet, de par le positionnement relatif des bras porteur (6) et (8) et leur axe d'articulation (10) et (11) d'une part, et des bras porteur (22) et (23), et leur axe d'articulation (24) et (25) d'autre part, on conçoit aisément, et cela ressort tout particulièrement bien des figures 1 et 2, que dès lors que l'on souhaite augmenter la voie, et donc que les deux bagues, respectivement (34) et (38) s'écartent l'une de l'autre, lesdites voies, respectivement avant et arrière s'éloignent l'une de l'autre, provoquant une augmentation de l'empattement du véhicule.

Par ailleurs, et ainsi qu'on peut l'observer toujours sur les figures 1 et 2, les organes directionnels, respectivement (12) et (26) sont reliés entre eux, au moyen d'une tige rigide (40), susceptible d'être mue en translation au moyen d'un organe (41) du type pignon, agissant sur une crémaillère solidaire ou constitutive de ladite tige rigide (40).

L'ensemble pignon + crémaillère pourrait là aussi être remplacé par un vérin, solidaire du châssis, et dont le point d'application est fixé sur lesdits organes directionnels

De la sorte, la translation à la tige (40) dans un sens ou dans l'autre, induit corollairement la rotation respective des organes directionnels (12) et (26), et partant l'orientation des roues avant et arrière en sens antagoniste, pouvant favoriser le virage.

Comme par ailleurs, les axes de maintien du parallélisme (27) et (28) des roues sont montées en porte-à-faux par rapport à l'axe du moyeu, cela favorise la rotation desdites roues arrières.

Le véhicule universel conforme à l'invention présente donc de nombreux avantages par rapport aux dispositifs de l'état antérieur de la technique. Outre la simplification et l'automatisation possibles de sa configuration, il permet également de disposer d'une plus grande stabilité, ce qui s'avère tout à fait important tant pour les applications aux engins de travaux publics, de transport ou de manutention, que pour les chariots pour paraplégiques.

On notera notamment, que contrairement aux dispositifs connus de l'art antérieur, la stabilité résultante du véhicule universel conforme à l'invention résulte du fait que lors de l'écartement des voies, on augmente l'empattement.

## Revendications

1. Véhicule universel de transport comportant quatre roues indépendantes (2 - 5), montées chacune sur un moyeu (7, 9, 20, 21) porté par un bras porteur (6, 8, 22, 23) solidaire du châssis (C) du véhicule, respectivement un train de roues avant et un train de roues arrière dont
chacun des bras porteur (6, 8, 22, 23) est articulé sur le châssis (C) selon un axe d'articulation ou axe - pivot (10, 11, 24, 25);
et lesdits bras porteur sont reliés directement ou indirectement à un ou plusieurs organes d'activation (34) assurant simultanément la rotation desdits bras porteur par rapport auxdits axes d'articulation d'au moins l'un des trains de roues, respectivement avant et arrière et la modification de l'empattement du véhicule;
**caractérisé en ce que** lesdits axes d'articulation ou axes - pivots (10, 11, 24, 25) desdits bras porteurs (6, 8, 22, 23) sont positionnés respectivement en amont du train de roues avant et en aval du train de roues arrière lorsque ledit véhicule universel est en position de largeur de voie minimum.

2. Véhicule universel de transport selon la revendication 1, ***caractérisé* en ce que** les bras porteur (6, 8, 22, 23) sont reliés à ou aux organes d'activation (34) par le biais de biellettes (31, 32, 36, 37).

3. Véhicule universel de transport selon la revendication 2, ***caractérisé* en ce que** le ou les organes d'activation (34) sont constitués d'une vis sans fin, solidaire du châssis (1), sur laquelle sont susceptibles de se déplacer en translation une bague (33, 38), au niveau de laquelle est solidarisée l'extrémité respective desdites biellettes (31, 32, 36, 37).

4. Véhicule universel de transport selon la revendication 3, ***caractérisé* en ce qu'**il ne comporte qu'un seul organe d'activation (34), sur lequel sont susceptibles de se déplacer de manière antagoniste les bagues (33, 38), induisant une variation simultanée de la largeur des voies avant et arrière et la longueur de l'empattement.

5. Véhicule universel de transport selon la revendication 1, ***caractérisé* en ce que** l'organe d'activation est constitué par un vérin, solidaire du châssis, dont l'autre point d'application est constitué par le bras porteur lui-même (6, 8, 22, 23).

6. Véhicule universel de transport selon l'une des revendications 1 à 5, ***caractérisé* en ce que** l'axe d'articulation (10, 11, 24, 25) des bras porteur (6, 8, 22, 23) sur le châssis est incliné par rapport à la verticale, de telle sorte à induire simultanément avec l'écartement de la voie et l'augmentation de l'empattement, une augmentation de la garde au sol.

7. Véhicule universel de transport selon l'une des revendications 1 à 6, ***caractérisé* en ce qu'**il comporte au moins un train de roues directionnelles, solidarisées au châssis, outre par le bras porteur principal (6, 8, 22, 23), également par un bras de maintien du parallélisme (13, 14, 27, 28), et solidaire dudit châssis (1) par le biais d'un organe directionnel (12, 26), lesdits bras étant articulés sur lesdits organes directionnels (12, 26) par un axe vertical (15, 16, 29, 30) et étant susceptible de tourner par rapport à cet axe au moyen d'une barre de direction (40), entraînée en translation par un ensemble crémaillère/pignon ou tout autre moyen équivalent.

## Claims

1. A universal transport vehicle comprising four independent wheels (2-5) each mounted on a hub (7, 9, 20, 21) carried by a support arm (6, 8, 22, 23) joined to the chassis (C) of the vehicle, a front wheel axle system and a rear wheel axle system respectively, of which
each of the support arms (6, 8, 22, 23) is articulated on the chassis (C) by a joint pin or swivel pin (10, 11, 24, 25);
and said support arms are directly or indirectly linked to one or more actuators (34) which simultaneously ensure rotation of said support arms relative to said joint pins of at least one of the wheel axle systems, front or rear respectively, and modification of the wheel base of the vehicle;
**characterised in that** said joint pins or swivel pins (10, 11, 24, 25) of said support arms (6, 8, 22, 23) are positioned ahead of the front wheel axle system and behind the rear wheel axle system when said universal transport vehicle is adjusted to its minimum track width.

2. A universal transport vehicle as claimed in claim 1, ***characterised* in that** the support arms (6, 8, 22, 23) are linked to actuator(s) (34) by links (31, 32, 36, 37).

3. A universal transport vehicle as claimed in claim 2, ***characterised* in that** the actuator(s) (34) comprise(s) a worm joined to the chassis (1) on which there is a ring (33, 38) capable of translational movement and to which the respective end of said links (31, 32, 36, 37) is joined.

4. A universal transport vehicle as claimed in claim 3, ***characterised* in that** it comprises only a single actuator (34) on which rings (33, 38) are capable of moving in opposite directions causing simultaneous adjustment of the front and rear track widths and of the wheel base.

5. A universal transport vehicle as claimed in claim 1, ***characterised* in that** the actuator consists of a cylinder joined to the chassis and of which the other load application point consists of the actual support arm (6, 8, 22, 23).

6. A universal transport vehicle as claimed in any of claims 1 to 5, ***characterised* in that** the joint pin (10, 11, 24, 25) of the support arms (6, 8, 22, 23) on the chassis slopes away from vertical so as to cause, at the same time as widening of the track width, an increase in the wheel base and an increase in the ground clearance.

7. A universal transport vehicle as claimed in any of claims 1 to 6, ***characterised* in that** it comprises at least one steering wheel axle system joined to the chassis by the main support arm (6, 8, 22, 23) and also by an arm that maintains wheel alignment (13, 14, 27, 28) and joined to said chassis (1) by a steering unit (12, 26), said arms being articulated on said steering units (12, 26) by a vertical pin (15, 16, 29, 30) and being capable of turning relative to this pin by means of a steering bar (40) translationally driven by a rack-and-pinion assembly or any other equivalent means.

## Patentansprüche

1. Universelles Transportfahrzeug mit vier unabhängigen Rädern (2-5), von denen jedes an einer Nabe (7, 9, 20, 21) angebracht ist, die durch einen fest mit dem Fahrgestell (C) des Fahrzeugs verbundenen Tragarm (6, 8, 22, 23) getragen wird, nämlich einem vorderen Radsatz und einem hinteren Radsatz, bei dem jeder der Tragarme (6, 8, 22, 23) entlang einer Gelenkachse oder Schwenkachse (10, 11, 24, 25) an dem Fahrgestell (C) angelenkt ist und die genannten Tragarme direkt oder indirekt mit einem oder mehreren Betätigungsmitteln (34) verbunden sind, welche gleichzeitig die Drehung der genannten Tragarme in bezug auf die genannten Gelenkachsen mindestens eines der Radsätze, nämlich des vorderen bzw. des hinteren, und die Veränderung des Radstandes des Fahrzeugs sicherstellen, ***dadurch gekennzeichnet,* daß** die genannten Gelenkachsen oder Schwenkachsen (10, 11, 24, 25) der genannten Tragarme (6, 8, 22, 23) vor dem vorderen Radsatz bzw. hinter dem hinteren Radsatz angeordnet sind, wenn sich das genannte universelle Fahrzeug in der Stellung mit minimaler Spurweite befindet.

2. Universelles Transportfahrzeug nach Anspruch 1, ***dadurch gekennzeichnet,* daß** die Tragarme (6, 8, 22, 23) mit dem oder den Betätigungsmitteln (34) über Schwenkstangen (31, 32, 36, 37) verbunden sind.

3. Universelles Transportfahrzeug nach Anspruch 2, ***dadurch gekennzeichnet,* daß** das oder die Betätigungsmittel (34) aus einer fest mit dem Fahrgestell (1) verbundenen Endlosschraube bestehen, an der sich in Translation ein Ring (33, 38) verschieben kann, an dessen Bereich das jeweilige Ende der genannten Schwenkstangen (31, 32, 36, 37) befestigt ist.

4. Universelles Transportfahrzeug nach Anspruch 3, ***dadurch gekennzeichnet,* daß** es nur ein einziges Betätigungsmittel (34) aufweist, an dem sich in gegenwirkender Weise die Ringe (33, 38) verschieben können, wodurch sie eine gleichzeitige Variation der vorderen und hinteren Spurweite und der Länge des Radstandes herbeiführen.

5. Universelles Transportfahrzeug nach Anspruch 1, ***dadurch gekennzeichnet,* daß** das Betätigungsmittel aus einem fest mit dem Fahrgestell verbundenen Zylinder besteht, dessen anderer Angriffspunkt von dem Tragarm selbst (6, 8, 22, 23) gebildet wird.

6. Universelles Transportfahrzeug nach einem der Ansprüche 1 bis 5, ***dadurch gekennzeichnet,* daß** die Gelenkachse (10, 11, 24, 25) der Tragarme (6, 8, 22, 23) an dem Fahrgestell in bezug auf die Vertikale geneigt ist, so daß sie gleichzeitig mit der Verbreiterung der Spur und der Vergrößerung des Radstandes eine Vergrößerung der Bodenfreiheit herbeiführt.

7. Universelles Transportfahrzeug nach einem der Ansprüche 1 bis 6, ***dadurch gekennzeichnet,* daß** es mindestens einen Satz gelenkter Räder aufweist, welche mit dem Fahrgestell außer durch den Haupt-Tragarm (6, 8, 22, 23) ebenfalls durch einen über ein Lenkmittel (12, 26) mit dem Fahrgestell (1) fest verbundenen Arm zum Erhalt der Parallelität (13, 14, 27, 28) fest verbunden sind, wobei die genannten Arme an den genannten Lenkmitteln (12, 26) durch eine vertikale Achse (15, 16, 29, 30) angelenkt sind und sich in bezug auf diese Achse mittels einer Lenkstange (40) drehen können, welche durch eine Anordnung aus Zahnstange und Zahnrad oder ein beliebiges anderes gleichwertiges Mittel in Translation versetzt werden kann.
